# EUROPEAN PATENT APPLICATION

(11) **EP 4 664 824 A1**
(43) Date of publication of application: **17.12.2025**
(21) Application number: 24181480.5
(22) Date of filing: 11.06.2024
(51) Int. Cl.: H04L 9/40, G06F 16/901, G06F 21/57

(54) **METHOD FOR ANALYSING CYBER SECURITY VULNERABILITIES**

(71) Applicant: Altitude Labs Limited, London W1W 5PF (GB)
(72) Inventor: GRIBBEN, Matthew John, Accrington, Lancashire BB5 2SS (GB); MALLIA, Shane Gabriel, Frenchay, Bristol BS16 1NQ (GB)
(74) Representative: Adamson Jones

(57) **Abstract**

There is disclosed a method and system for identifying vulnerabilities in a security configuration system. The method comprises collecting data for a plurality of users concerning user access to computer systems controlled by a security configuration system, wherein the data is collected from conditional access configurations for said users. Storing the collected data about the plurality of users' access to said computer systems as a graph comprising nodes and access paths between said nodes. Performing an analysis on the collected data stored in the graph to identify vulnerabilities in the security configuration system by identifying access paths for which one of more condition is incomplete. Grouping users which have access paths having the same vulnerabilities and outputting an indication of said user groups.

## Description

The present invention relates to a method for identifying and analysing cyber security vulnerabilities, particularly through modelling configuration data.

### Background

Individuals and organisation use cyber security to reduce the risk of cyberattacks against their systems, networks, programs, devices, and data. Configuration settings are cyber security controls that are implemented when building and installing computers and network devices to reduce cyber risks.

Security misconfigurations, such as system or application configuration settings being missing or erroneously implemented, can result is unauthorised access. Within an organisation, security misconfigurations are common due to the numerous changes which occur within a network as time goes on resulting in increased complexity. Security misconfigurations are one of the most common causes of data breaches and cyberattacks.

Identity-based security is a type of cyber security that focuses on access to digital information or services based on authenticating and authorising an identities access to a resource. It ensures that user and device identities are validated and entitled to access the resources they can within a system. The reliance on strong authentication and authorisation has dramatically increased in recent years as organisations have adopted cloud-based technologies and services to support remote and distributed workforces. Cyber attackers often target identities, making this a critical path for organisation to secure.

There are known methods for finding gaps and attack paths within configuration data, however, these can be slow at identifying all vulnerabilities and limit improving an organisation's cyber security. In addition, it can take time to fix the gaps/attack patch meaning the identities associated with these gaps/attack paths provide opportunity for cyber attackers.

There is a need for a method which enables organisations to analyse their configuration data to reduce the risk of cyberattacks.

It is an aim of the invention to provide a method that mitigates one or more of the above-mentioned problems.

### Statements of invention

According to a first aspect of the invention there is provided a method for identifying vulnerabilities in a security configuration system, the method comprising; collecting data for a plurality of users concerning user access to computer systems controlled by a security configuration system, wherein the data is collected from conditional access configurations for said users, storing the collected data about the plurality of users' access to said computer systems as a graph comprising nodes and access paths between said nodes, performing an analysis on the collected data stored in the graph to identify vulnerabilities in the security configuration system by identifying access paths for which one of more condition is incomplete, characterised by grouping users which have access paths having the same vulnerabilities and outputting an indication of said user groups.

Storing the collected data may comprises storing users and conditions as nodes in the graph. Storing the collected data may also comprises storing 'AND' relationships within condition access policies as access paths between nodes and storing 'OR' relationships within condition access policies between access paths in the graph.

Preferably the method further comprises identifying incomplete conditions through a set of partially included conditions and storing this in the graph as nodes and access paths between said nodes.

The analysis may comprise sorting all incomplete conditions by condition type and number of said condition type. The analysis may also comprise matching access policies for which one of more condition is incomplete and access policies containing the one or more incomplete condition, wherein an unmatched access policy with an incomplete condition comprises a vulnerability.

Preferably the method further comprises sorting the identified vulnerabilities by how many users with access paths to the identified vulnerability.

More preferably the method further comprises sorting the identified vulnerabilities by how many conditions in the access path with the identified vulnerability.

The method may further comprise outputting an indication of all vulnerabilities in the security configuration system.

The method may further comprise storing the identified vulnerabilities as nodes within the graph.

The method may further comprise storing the user groups as nodes within the graph.

Preferably the method further comprises testing the identified vulnerabilities by accessing the security configuration as a user within a user group and following said access path for which one of more condition is incomplete.

Preferably the method further comprises indicating a new condition completing the incomplete condition for all users within a user group.

According to a second aspect of the invention there is provided a data carrier comprising machine readable instructions for the operation of one or more processor to carry out; collecting data for a plurality of users concerning user access to computer systems controlled by a security configuration system, wherein the data is collected from conditional access configurations for said users, storing the collected data about the plurality of users' access to said computer systems as a graph comprising nodes and access paths between said nodes, performing an analysis on the collected data stored in the graph to identify vulnerabilities in the security configuration system by identifying access paths for which one of more condition is incomplete, characterised by grouping users which have access paths having the same vulnerabilities; outputting an indication of said user groups.

According to a third aspect of the invention there is provided a system comprising a processor for carrying out; collecting data for a plurality of users concerning user access to computer systems controlled by a security configuration system, wherein the data is collected from conditional access configurations for said users, storing the collected data about the plurality of users' access to said computer systems as a graph comprising nodes and access paths between said nodes, performing an analysis on the collected data stored in the graph to identify vulnerabilities in the security configuration system by identifying access paths for which one of more condition is incomplete, characterised by grouping users which have access paths having the same vulnerabilities and outputting an indication of said user groups.

According to another aspect of the invention there is provided a method for identifying vulnerabilities in a security configuration system, the method comprising; collecting data for a plurality of users concerning user access to computer systems controlled by a security configuration system, wherein the data is collected from security configurations for said users, storing the collected data about the plurality of users' access to said computer systems as a graph comprising nodes and access paths between said nodes, performing an analysis on the collected data stored in the graph to identify vulnerabilities in the security configuration system by identifying access paths for which one of more condition is incomplete, characterised by grouping users which have access paths having the same vulnerabilities and outputting an indication of said user groups.

### Detailed description

Practicable embodiments of the invention are described in further detail below with reference to the accompanying drawings, of which:
**Figure** 1 shows a method for analysing vulnerabilities in a security configuration system in accordance with an example of the present invention.
**Figure** 2 shows a first simplified example a string of the security configuration system graph modelled by the method in accordance with an example of the present invention.
**Figure** 3 shows a method for analysing graph data in accordance with an example of the present invention.
**Figure** 4 shows a second simplified example a string of the security configuration system graph modelled by the method in accordance with an example of the present invention.

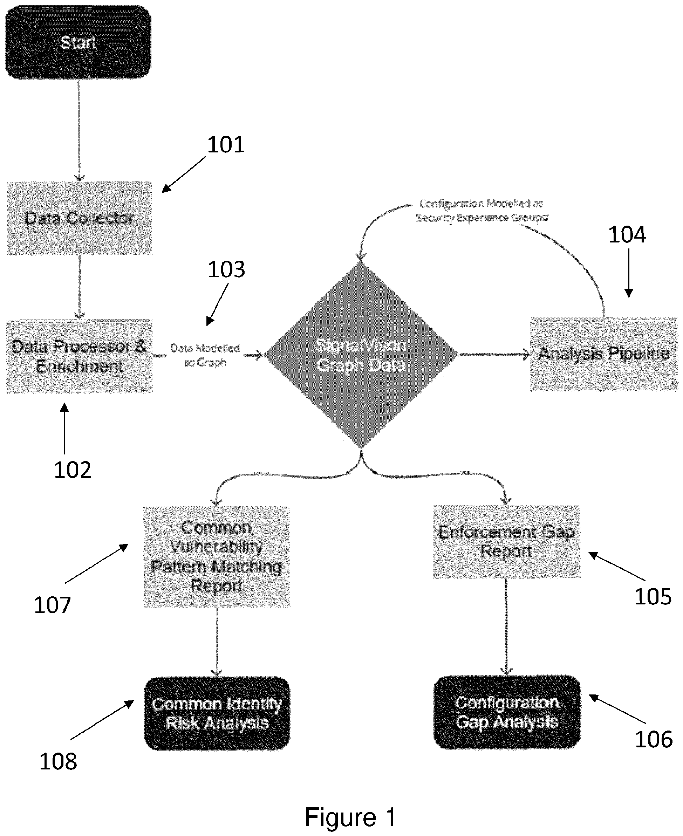

Figure 1 shows a method for analysing cyber security vulnerabilities 100. The method 100 comprises:
- Collecting data 101
- Processing and enriching the data 102
- Modelling the data as a graph 103
- Performing analysis on the graphical data 104

The output of analysis are an enforcement gap report 105 which provides configuration gap analysis 106 and a common vulnerability pattern matching report 107, which provides common identity risk analysis 108.

The steps of the method 100 are described in detail herein.

### Data Collection

The method comprises collecting data 101 from a data source.

The data source comprises a system that connects multiple services and devices. The data source may comprise a security configuration system. The data source may comprise a system entity that creates, maintains, and manages identity information for principals and also provides authentication services to relying applications within a federation or distributed network. The data source may comprise security configurations for said users. The data source may comprise conditional access configurations for said users. The data source may comprise conditional access policies for said users. The data source may comprise an identity provider application programming interface (API). For example, the data source may comprise Microsoft Graph.

The data collected from the data source may comprise security configuration data. The data collected from the data source may comprise security configuration data and ancillary data. The data collected from the data source may comprise data relating to a plurality of users concerning user access to computer systems controlled by a security configuration system.

For example, the data collected from the data source may comprise user information, security configurations, and an authentication report.

A security configuration comprises a set of conditions. Each condition comprises a security measure applied to a user. The security measure may be applied under certain circumstances.. For example, a user may not access a certain application when in a certain location.

These conditions are known within the art and may comprise any number of security measures.

These conditions may be referred to as conditional access, conditional access configurations, or conditional access policies.

The security configuration of a system is the combined effect of all the security configurations. The security configurations layer upon each other, and the combined configurations can allow gaps in controls to arise through the combination of conditions.

The user information collected from the data source may comprise for example; account activation status, user display name, unique user identifier, user category, synchronization status with local servers, unique entity identifier, entity creation timestamp, allocated service subscriptions, planned service allocations, accountEnabled, displayName, display name, userPrincipalName, user principal name, userType, identity type, onPremisesSyncEnabled, Synchronisation state, id, created Date Time, assigned Licenses, assignedPlans, etc.

The security configurations collected from the data source may comprise for example; configuration identifier, configuration template identifier, configuration creation timestamp, configuration modification timestamp, configuration state, access session controls, access conditions, risk levels associated with users, risk levels associated with sign-in attempts, types of client applications, synchronization with email services, risk levels associated with service accounts, supported operating systems, geographical access locations, accessing device characteristics, specific client application access, application access management, applications included in policy, applications excluded from policy, user actions triggering configuration, authentication context requirements, application-specific filters, user access management, users included in policy, users excluded in policy, group access management, groups included in configuration, groups excluded from configuration, role-based access control, roles included in configuration, roles excluded in configuration, guest user access management, guest users included in configuration, guest users excluded from policy, conditions for granting access, access decision logic, predefined access controls, custom access requirements, digital agreements for access, required authentication strength, id, templatedld, created Date Time, modified Date Time, state, sessnionControls, conditions, userRiskLevels, signlnRiskLevels, clientAppTypes, exchangeActiveSync, servicePrincipalRiskLevels, platforms, locations, devices, clientApplications, applications, includeApplications, excludeApplications, includeUserActions, includeAuthenticationContextClassReferences, application Filter, users, includeUsers, excludeUsers, includeGroups, excludeGroups, include Roles, exclude Roles, includeGuestsOrExternalUsers, excludeGuestsOrExternalUsers, grantControls, operator, builtinControls, customAuthenticationFactors, termsOfUse, authenticationStrength, etc.

The authentication report collected from the data source may comprise for example; report identifier, user identifier, user's displayed name, type of user, administrative status, self-service password reset registration status, self-service password reset activation status, capability for self-service password reset, multi-factor authentication registration status, multi-factor authentication capability, capability for passwordless authentication, registered authentication methods, preferred system authentication method status, preferred system authentication methods, user-preferred secondary authentication method, report last updated timestamp, id, userPrincipleName, userDisplayName, userType, isAdmin, isSsprRegistered, isSsprEnabled, isSsprCapable, isMfaRegistered, isMfaCapable, isPasswordlessCapable, methodsRegistered, isSystem PreferredAuthentication Method Enabled, system PreferredAuthenticationMethods, user Preferred Method ForSecondary Authentication, lastUpdatedDateTime, etc.

### Graph modelling

The data collected from the data collection step 101 is then processed and enriched 102. The data collected from the data collection step 101 is modelled as a graph 103. The graph comprises a directed graph. The graph may comprise a directed acyclic graph.

The collected data is turned into nodes and relationships between the nodes to build a model of the securing configuration as a directed graph.

The nodes of the graph may comprise objects within the configuration data. The nodes may comprise identities, configurations, or conditions. For example, the nodes may comprise display names, client applications, locations, applications, etc.

The relationships between the nodes may comprise access paths.

The relationships between the nodes are present in the data collected or extracted from the data collected.

A relationship collected and extracted from the data may comprise an inclusion or an exclusion.

An inclusion within the collected data may be, for example, a policy within the configuration data includes an operating system, such as Windows operating system, the inclusion relationship between the policy and Windows operating system would be represented in the directed graph between the policy node and the Windows operating system node showing an inclusion.

The directed graph may represent "and" "or" conditions, inclusions, and exclusions.

The process of connects up this highly relational data, consisting of identities, configurations and conditions that then allows for analysis to be performed on the data.

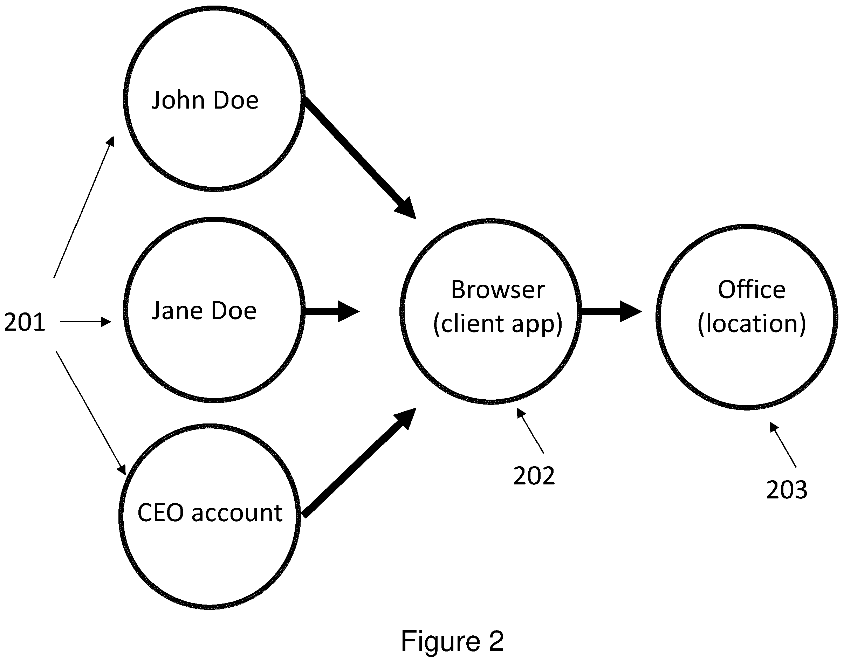

Figure 2 shows a simplified example of one string of the graph 103. The string comprises a plurality of nodes represented by circles and a plurality of relationships between the nodes represented by arrows.

Nodes are represented with parentheses around the attributes and information regarding the entity. Relationships are depicted with an arrow (either directed or undirected), relationships may also comprise the relationship type in brackets.

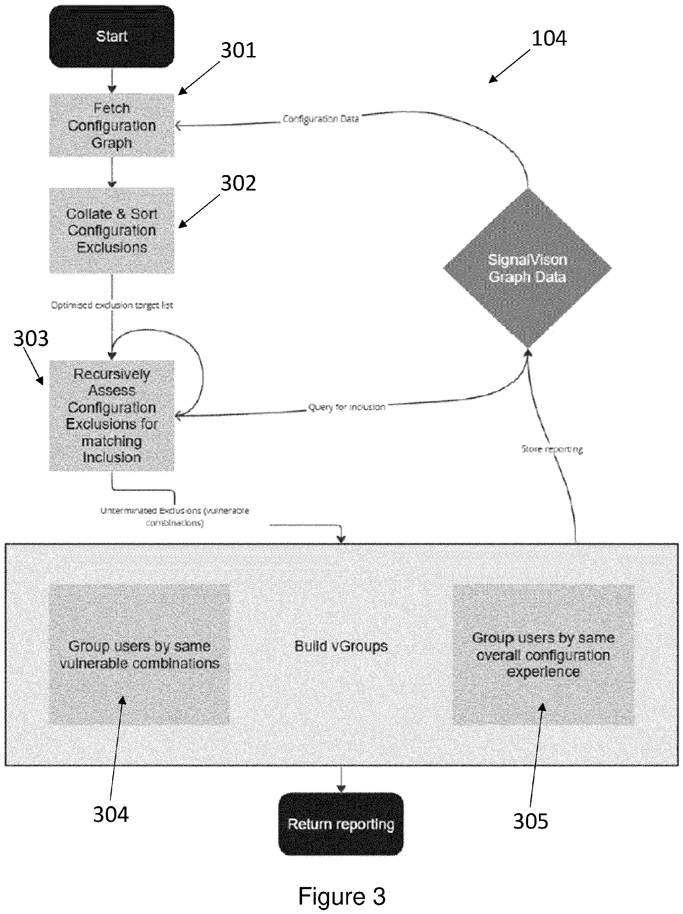

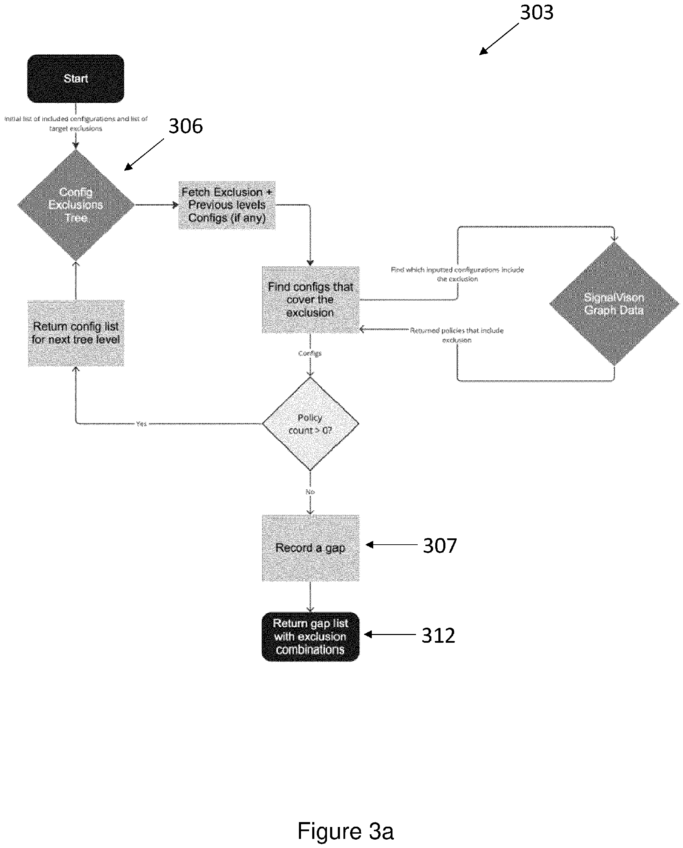

The example graph string comprises a plurality of users 201, a client application 202, and a location 203. The arrows between the nodes denote the relationship between the connected nodes. In the example shown in Figure 3 if any of the three users 201 use a browser (e.g. Chrome, Internet Explorer, Edge) and access from the Office internet connection.

The users 201 are identified on the nodes of the graph by their display names. The client application in this example is a browser. The location in this example is titled office.

Common types of nodes may comprise common colours, for example, all location nodes may be coloured green.

The analysis of the graph data creates the relationships between the nodes. For example:
1) if a user is in a group, a 'member of' relationship between the user and the node is created.
2) If an admin selects 'Windows' as a platform for the policy then a relationship of type 'include' between the policy node and the 'Windows' platform node is created. We then create an 'exclude' relationship to macOS, android, iOS and linux to illustrate that the policy only includes Windows.

These examples are for loading the graph information into the database. In another example, gap results may be entered into the graph database by linking the conditions together to form a chain.

The relationships between nodes may change based on whether a data load or gap analysis is being performed.

### Analysis

Analysis 104 is performed on the processed and enriched data which has been modelled as a graph.

Figure 3 shows an overview of the analysis 104 performed on the graph data.

Firstly the data is retrieved from the graph 301.

The security configuration directed graph data is retrieved through a series of graph data queries. The queries may be in a query language. The queries may be in the graph query language, for example, cypher.

The query language may be used to recognise patterns of nodes and relationships and filters those patterns based on labels and properties.

The query language may comprise keywords for specifying patterns, filtering patterns, and returning results. For example, a keyword, or a plurality of keywords may be used to specify a pattern relating to an exclusion within the configuration data and to filter out the exclusions within the configuration data and return these results.

The relationships between nodes enable fast querying.

The configuration exclusions retrieved from the graph data then goes through a collate and sort process 302.

The configuration exclusion creates a vulnerability. The exclusions are sorted/grouped up front.

The exclusions that exist within the configuration graph are processed. Exclusions may comprise a condition for which any configuration explicitly does not apply namely an explicit exclusion, or an exclusion may comprise an implicit exclusion. A conditional inclusion may create implicit exclusions.

Explicit exclusions are present in the configuration graph. Implicit exclusions need to be built from the configuration graph data.

Implicit exclusions may be determined by table lookups. Implicit exclusions may be determined by algorithms.

An explicit exclusion within the graph data may be for example, an operating system, such as Windows operating system, where no configurations apply to the Windows operating system.

An implicit exclusion is an exclusion that exists because a set of conditions is only partially included. For example, if in a configuration, three out of five possible device types are included then the other two device types are implicitly excluded by this set of conditions. Implicit exclusions must be built from the data as they do not exist in the graph data as extracted.

All of the exclusions have been collated when all explicit exclusions within the graph data have been extracted and all of the implicit exclusions within the data have been built.

When all of the exclusions have been collated they are then sorted into an optimised exclusion target list. The explicit and implicit exclusions are sorted by type, i.e. Location (3), Device (4), Cloud Application (5). The exclusions are then sorted into size order depending on how many exclusions of that type, i.e. Location (3), Device (4), Cloud Application (5).

The sorted exclusions then undergo recursive analysis 303.

Figure 3a shows an overview of the recursive analysis 303 performed on the graph data.

The recursive analysis algorithm 303 is applied to iterate the exclusion combinations to find matching inclusions combinations within the graph.

A configuration exclusion tree 306 is created from the optimised exclusion target list.

An exclusion and previous levels of configurations (if any are present) are retrieved from the configuration exclusion tree 306.

The graph data is searched for any inputted configuration which includes the exclusion retrieved.

If any policies are identified which include the exclusion, the configuration list is included into the next level of the exclusions tree.

If no policies are identified a gap is recorded 307.

The list of gaps with their exclusion combinations are returned 308.

The recursive analysis 303 seeks to find an exclusion a matching inclusion. Where no matching inclusion is found for an exclusion comprises a gap.

An example of an exclusion combination and matching inclusion combination would be where an implicit exclusion excludes an object, and separate inclusion then includes the same object. For example, where there is a configuration which excludes three out of five possible device types, and another configuration which includes the other two device types.

Policies that have inclusions for a condition are looped through one at a time and any policies that have that specific inclusion are taken forward.

For example, for two conditions "platform" and "location", there may be overall three exclusions "macOS", "Windows" and, "office internet connection".

The graph data is searched to find all applicable policies that include "macOS" and "Windows". The policies are then recursively passed forward to check for location. If no policies match "MacOs" and "Windows", there is a gap. If there are policies at the platform level, the subset is then taken forward and checked for location.

There are two possible outcomes to a matching set of inclusion combinations. Either the combinations will terminate at one or more policies, or it won't terminate at any policy.

Where a combination does not terminate at any policy, this denotes a gap in the configuration. A gap is a result of a vulnerable combination, or a plurality of vulnerable combinations. A gap may also be referred to as an unterminated exclusion.

A gap in the configuration results in a gap node being created within the graph. All conditions related to the gap node are shown in the graph. Through reiterations of the analysis pipeline the graph data is built upon to identify and represent graphically all gaps in the configuration data.

### Build user groups

After the analysis pipeline, configuration gaps are represented in the directed graph with all objects related to the gap and the nature of the relationships.

The graph data which has been built up over the previous method steps is used to identify which identity user nodes within the graph which have identical vulnerability combinations 304 and which have the overall same configuration nodes applied to them 305.

Identities or users within the configuration data are then grouped. The groups of identities may be referred to as vGroups or security experience groups.

The groups may be formed from a set of policies.

For example, if a user has 10 policies applied and there are 1000 other users with the same 10 policies gap analysis can be performed for those 10 policies as a single analysis.

The user experience groups are analysed, and the same gap chains are identified. Each gap may show all the users who are affected by the gap.

Groups of users who have the same set of configurations applied to them are placed in vGroups. For example, User A and User B have 3 sets of configurations that apply to them (by nature of the conditions in those configurations) but User C in addition to those 3 configurations has 1 or more additional configurations that apply to them. In this instance, User A and User B would be in vGroup 1 and C in vGroup 2.

The users in each vGroup have the same configurations apply to them.

vGroups represent the overall security experience of an individual or group of identities within a system. All identities associated with a particular vGroup will have the same security requirements. All identities associated with a particular vGroup will have the gaps in their configuration data.

vGroups provide a view of how security configurations apply to identity security.

In this example, there are two different types of vGroups. The first type of vGroup comprises nodes which have identical vulnerability combinations 304 and the second type of vGroup comprises identity nodes have the same overall considerations nodes applied to them 305.

vGroups are stored as a new graph database nodes with relationships to conditions and gap nodes that represent their security experience.

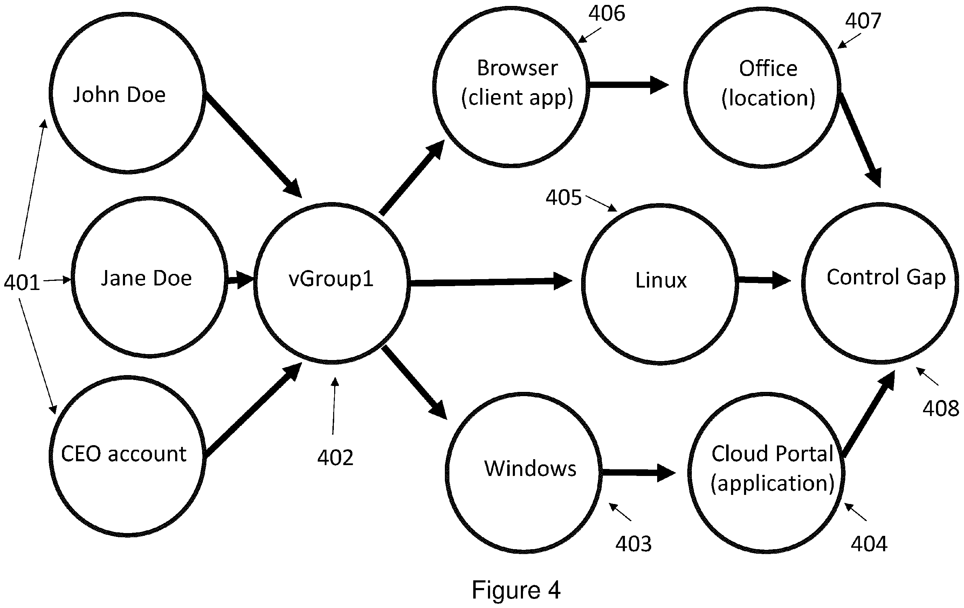

Figure 4 shows another simplified example of one string of the graph 103 of a security configuration system.

In the example shown in Figure 4 the graph has been updated with nodes produced by the analysis of the graph.

The graph string comprises the nodes as follows three users 401, a vGroup 402, Windows 403, Cloud Portal (application) 404, Linux 405, Browser (client application) 406, Office (Location) 407, Control Gap (408).

The users 401 are all in the same vGroup 402, meaning they have the same overall security experience within this example security configuration system. The users 401 of the vGroup 402 are all subject to control gap 408.

There are three paths of configuration combinations that lead to the control gap 408.

Following the paths shown in Figure 4, the relationship between nodes is an "AND" relationship, and the relationship between paths is an "OR" relationship.

The control gaps in the security configuration system shown in Figure 4 occur when any one of the three users 401:
- Access any cloud application from a browser (e.g. Chrome, Internet Explorer, Edge) AND access from this from the Office internet connection Or
- Access from a Linux operating system
   Or
- Access from a Windows operating system AND when access the cloud portal application

### Outputs

The graph built from the analysis can produce reports on the secure configuration.

Each of the two vGroups can be output to identify users subject to vulnerabilities in the secure configuration.

In this example, the outputs of the analysis are an enforcement gap report 105 which provides configuration gap analysis 106 and a common vulnerability pattern matching report 107, which provides common identity risk analysis 108.

The enforcement gap report 105 and configuration gap analysis 106 enables an assessment of the level of information security compares to a particular standard. Based on the enforcement gap report 105 and configuration gap analysis 106 thereof, it can be determined how and whether to implement a given security standard. A security standard is determined based on multiple factors such as the nature of the data held within a system and the likelihood of a cyberattack.

The enforcement gap report 105 is generated using the vGroups and configuration gap nodes created in the analysis 104 of the method100. The enforcement gap report 105 comprises all theoretically possible gaps in enforcement of the security configuration system. The enforcement gap report 105 comprises properties of the gaps in the security configuration system, for example, under what circumstances a gap exist, how large a gap is in terms of how many conditions apply to the gap, how large a gap is in terms of how many identities the gap applies to, etc.

In this example, how large a gap is in terms of how many identities the gap applies can be determined from the vGroups.

The common vulnerability pattern matching report 107 provides common identity risk analysis 108.

A set of common vulnerability patterns are used to provide common identity risk analysis 108. The common vulnerability patterns comprise patterns of configurations in the graph database that are common to misconfigured security controls or mismanage identities.

Patterns are created based on the analysis of the misconfigured controls. The common patterns of misconfiguration may change over time as new common errors are identified. The changes improve the systems capability to identify and highlight common patterns of misconfiguration over time.

The common vulnerability pattern matching report 107 can be produced by the method for every identity within the security configuration system. A common vulnerability pattern matching report 107 identifies risk at an individual identity level. The common vulnerability pattern matching report 107 is then used to perform a common identity risk analysis 108.

The common identity risk analysis 108 comprises using a set of issue combinations to identify issues common to multiple identities. For example, the common identity risk analysis 108 may identify overprivileged dormant accounts, lack of location-based controls, etc.

### Testing and fixing vulnerabilities/gaps

The result of the common vulnerability matching 107 are included in the enforcement gap report 105.

The method for common vulnerability matching 107 comprises a set of pre-defined 'signatures' that are searched for within the graph 103. The method for the enforcement gap report 105 comprises exhaustive searching. The pre-defined 'signatures' used for the common vulnerability matching 107 are tested to ensure accuracy and completeness.

The signature may comprise a pre-defined gap or configuration. The signature may comprise a common pre-defined gap or configuration. For example, it is common to intentionally not prompt for MFA in the office location - therefore a signature may comprising looking for location exclusions in policies.

A signature may comprise looking for gaps for Powershell and Mobile Apps and Desktop Clients. A signature may comprise looking the user subject to an IP whitelist. The signature may comprise looking for a gap at specific locations. The signature may comprise looking for blocked legacy protocols. The signature may comprise looking for a critical admin role when the identity has gap.

The vulnerabilities or gaps are tested once identified.

The vulnerabilities or gaps may be tested using multiple manual sign-ins.

Alternatively, the vulnerabilities or gaps may be tested using a simulation estimating the result a sign-in has in the security configuration system. The sign-in simulation can predict the result of security configurations in the security configuration system. The simulation estimates the result any sign-in has on the policies within the security configuration system and generates a report.

In this example, the vulnerabilities or gaps may be tested using the Microsoft Conditional Access What If policy tool.

Only the gaps identified by the method of the present invention are tested. When testing the gaps only the conditions relating to the gap are configured for the sign-in scenario simulation. The sign-in simulation then provides a report as to what would happen when the conditions input are executed. The result of the sign-in simulation confirms the enforcement gap report 105. The result of the sign-in simulation confirms that the gap/vulnerability exists and related to the conditions input.

When gaps/vulnerabilities are identified fixes can be suggested based on the vGroups created. Suggested fixes for the gaps may comprise point fixes, for example, a control policy can be enforced that defines the configurations relating to the identified gap. For example, if the system has identified a gap exists for 3 users on Windows and at the office location, the policy suggested would be scoped to the three users, on Windows, and at the office location.

## Claims

1. A method for identifying vulnerabilities in a security configuration system, the method comprising:
collecting data for a plurality of users concerning user access to computer systems controlled by a security configuration system;
wherein the data is collected from conditional access configurations for said users;
storing the collected data about the plurality of users' access to said computer systems as a graph comprising nodes and access paths between said nodes;
performing an analysis on the collected data stored in the graph to identify vulnerabilities in the security configuration system by identifying access paths for which one of more condition is incomplete;
**characterised by**
grouping users which have access paths having the same vulnerabilities;
outputting an indication of said user groups.

2. The method of claim 1, wherein storing the collected data comprises storing users and conditions as nodes in the graph.

3. The method of claim 1 or 2, wherein storing the collected data comprises storing 'AND' relationships within condition access policies as access paths between nodes and storing 'OR' relationships within condition access policies between access paths in the graph.

4. The method of any preceding claim, further comprising identifying incomplete conditions through a set of partially included conditions and storing this in the graph as nodes and access paths between said nodes.

5. The method of any preceding claim, wherein the analysis comprises sorting all incomplete conditions by condition type and number of said condition type.

6. The method of any preceding claim, wherein the analysis comprises matching access policies for which one of more condition is incomplete and access policies containing the one or more incomplete condition, wherein an unmatched access policy with an incomplete condition comprises a vulnerability.

7. The method of any preceding claim, further comprising sorting the identified vulnerabilities by how many users with access paths to the identified vulnerability.

8. The method of any preceding claim, further comprising sorting the identified vulnerabilities by how many conditions in the access path with the identified vulnerability.

9. The method of any preceding claim, further comprising outputting an indication of all vulnerabilities in the security configuration system.

10. The method of any preceding claim, further comprising storing the identified vulnerabilities as nodes within the graph.

11. The method of any preceding claim, further comprising storing the user groups as nodes within the graph.

12. The method of any preceding claim, further comprising testing the identified vulnerabilities by accessing the security configuration as a user within a user group and following said access path for which one of more condition is incomplete.

13. The method of any preceding claim, further comprising indicating a new condition completing the incomplete condition for all users within a user group.

14. A data carrier comprising machine readable instructions for the operation of one or more processor to carry out:
collecting data for a plurality of users concerning user access to computer systems controlled by a security configuration system;
wherein the data is collected from conditional access configurations for said users;
storing the collected data about the plurality of users' access to said computer systems as a graph comprising nodes and access paths between said nodes;
performing an analysis on the collected data stored in the graph to identify vulnerabilities in the security configuration system by identifying access paths for which one of more condition is incomplete;
**characterised by**
grouping users which have access paths having the same vulnerabilities;
outputting an indication of said user groups.

15. A system comprising a processor for carrying out:
collecting data for a plurality of users concerning user access to computer systems controlled by a security configuration system;
wherein the data is collected from conditional access configurations for said users;
storing the collected data about the plurality of users' access to said computer systems as a graph comprising nodes and access paths between said nodes;
performing an analysis on the collected data stored in the graph to identify vulnerabilities in the security configuration system by identifying access paths for which one of more condition is incomplete;
**characterised by**
grouping users which have access paths having the same vulnerabilities;
outputting an indication of said user groups.
